# EUROPÄISCHE PATENTANMELDUNG

(11) **EP 0 750 123 A1**
(43) Veröffentlichungstag der Anmeldung: **27.12.1996**
(21) Anmeldenummer: 95109686.6
(22) Anmeldetag: 22.06.1995
(51) Int. Cl.: F16C 11/06

(54) **Kugelgelenk**

(71) Anmelder: TRW Fahrwerksysteme GmbH & Co. KG, 40547 Düsseldorf (DE)
(72) Erfinder: Dorr, Christoph Dipl. Ing., 40667 Meerbusch (DE)
(74) Vertreter: Stenger, Watzke & Ring Patentanwälte

(57) **Zusammenfassung**

Die Erfindung betrifft ein Kugelgelenk mit einem auf einem Zapfen (1a) einer Flanschplatte (1) angeordneten Lagerring (2), auf dem mittels einer Lagerschale (5) ein Gehäuse (4) begrenzt verdreh- und kippbar gelagert ist. Um das Kugelgelenk mit einer vorherbestimmbaren Elastizität in radialer Richtung auszubilden, ist auf dem Lagerring (2) über eine elastische Zwischenlage (7) eine mit der Lagerschale (5) zusammenwirkende Kugelringschale (6) angeordnet.

## Beschreibung

Die Erfindung betrifft ein Kugelgelenk mit einem auf einem Zapfen einer Flanschplatte angeordneten Lagerring, auf dem mittels einer Lagerschale ein Gehäuse begrenzt verdreh- und kippbar gelagert ist.

Derartige Kugelgelenke sind bekannt. Sie werden insbesondere für die Anlenkung der Achsstreben von Kraftfahrzeugen, vorzugsweise Lastkraftwagen verwendet.

Der Erfindung liegt die **Aufgabe** zugrunde, ein Kugelgelenk der voranstehend beschriebenen Art mit einer vorherbestimmbaren Elastizität in radialer Richtung auszubilden.

Die **Lösung** dieser Aufgabenstellung durch die Erfindung ist dadurch gekennzeichnet, daß auf dem Lagerring über eine elastische Zwischenlage eine mit der Lagerschale zusammenwirkende Kugelringschale angeordnet ist.

Durch die elastische Verformung der Zwischenlage ergibt sich bei dem erfindungsgemäß weitergebildeten Kugelgelenk eine definierte Elastizität insbesondere in radialer Richtung, die durch die Abmessungen, das für die Zwischenlage verwendete Material und dessen Vorspannung vorherbestimmbar ist. Durch Austausch des auf dem Zapfen angeordneten Lagerringes gegen einen mit einer elastischen Zwischenlage und einer Kugelringschale ausgestatteten Lagerring gemäß der Erfindung lassen sich auch vorhandene Kugelgelenke problemlos nachrüsten.

Gemäß einem weiteren Merkmal der Erfindung ist der Lagerring mit einer kugelringförmigen Außenfläche und sich beidseitig in Achsrichtung des Zapfens anschließenden zylindrischen Mantelflächen versehen, an denen die elastische Zwischenlage mit ringförmigen Endflächen anliegt. Bei einer Belastung des Kugelgelenks in axialer Richtung ergibt sich hierdurch durch die von Lagerring und Kugelringschale auf die elastische Zwischenlage ausgeübte Keilwirkung eine hohe Steifigkeit. Die kleine ringförmige Stirnfläche der Zwischenlage führt zu einer hohen dynamischen Festigkeit und damit zu einer hohen Lebensdauer der Zwischenlage.

Erfindungsgemäß reicht die Kugelringschale mit ihren stirnseitigen Enden bis in den Bereich der zylindrischen Mantelflächen des Lagerringes, wodurch sich in axialer Richtung eine Überdeckung des Lagerringes durch die Kugelringschale ergibt, da deren rechtwinklig zur Achse des Zapfens verlaufender Durchmesser an den stirnseitigen Enden kleiner als der größte Durchmesser des Lagerringes ist. Es wird somit trotz der Verwendung einer elastischen Zwischenlage eine hohe mechanische Sicherheit des erfindungsgemäßen Kugelgelenks auch in Achsrichtung erzielt.

Bei einer bevorzugten Ausführungsform der Erfindung ist die mit der Kugelringschale zusammenwirkende Lagerschale geschlitzt, um eine einfachere Herstellung und Montage zu ermöglichen. Um die Lagerschale zuverlässig innerhalb des Gehäuses festzulegen, wird in an sich bekannter Weise ein vorzugsweise elastischer Keilring verwendet, der die Möglichkeit eröffnet, die Toleranzen der Einzelteile auszugleichen und eine vorgebbare Vorspannung im Kugelgelenk zu erzeugen. Dieser Keilring kann über einen Zwischenring durch einen Sprengring im Gehäuse festgelegt werden.

Bei einer alternativen Ausgestaltung nach der Erfindung ist der Keilring im Gehäuse durch einen Haltering festgelegt, der in eine Ringnut des Gehäuses eingreift. Dieser kann einstückig mit einem Dichtungsbalg ausgebildet sein, dessen kleinere Öffnung abgedichtet auf dem Zapfen angeordnet ist. Hierdurch ergibt sich neben einer Verringerung der Bauteile eine einfachere Montage, die erfindungsgemäß noch verbessert werden kann, wenn auch der Keilring einstückig mit dem Haltering ausgebildet wird. Erfindungsgemäß ist schließlich in der auf dem Zapfen angeordneten Öffnung des Dichtungsbalges ein innenliegender Verstärkungsring einstückig angeordnet.

Auf der Zeichnung sind zwei Ausführungsbeispiele des erfindungsgemäßen Kugelgelenkes dargestellt, und zwar zeigt:
- Fig. 1: eine hälftig geschnittene Seitenansicht der ersten Ausführungsform und
- Fig. 2: eine entsprechende Darstellung der zweiten Ausführungsform.

Bei beiden Ausführungsbeispielen umfaßt das Kugelgelenk eine Flanschplatte 1, die beispielsweise an der Starrachse eines Lastkraftwagens befestigt wird und einstückig mit einem konischen Zapfen 1a versehen ist, auf dem ein Lagerring 2 mittels einer Dehnschraube 3 befestigt ist. Dieser Lagerring 2 dient der verdrehbaren und kippbaren Lagerung eines Gehäuses 4, das beim Ausführungsbeispiel einstückig am Ende einer Achsstrebe 4a ausgebildet ist.

Wie aus dem Teilschnitt beider Ausführungsbeispiele hervorgeht, ist in das Gehäuse 4 eine Lagerschale 5 aus Kunststoff eingesetzt, die mit einer Kugelringschale 6 zusammenwirkt, die unter Zwischenfügen einer elastischen Zwischenlage 7 auf dem Lagerring 2 angeordnet ist. Die Kugelringschale 6 besteht aus Stahl und ist mit einer solchen Höhe ausgeführt, daß ihr Öffnungsdurchmesser an den stirnseitigen Enden kleiner ist als der rechtwinklig zur Längsachse des Zapfens 1a gemessene größte Durchmesser des Lagerringes 2. Hierdurch wird trotz der Verwendung der elastischen Zwischenlage 7 eine hohe mechanische Sicherheit des Kugelgelenks in Achsrichtung geschaffen.

Die elastische Zwischenlage 7 wird aus einem geeigneten Kunststoff hergestellt, um die gewünschte Elastizität des Kugelgelenkes in radialer Richtung zu erzeugen. Um in axialer Richtung eine hohe Steifigkeit zu schaffen, ist der Lagerring 2 zu beiden Seiten seiner kugelringförmigen Oberfläche mit sich anschließenden zylindrischen Mantelflächen 2a versehen, an denen die elastische Zwischenlage 7 mit ringförmigen Endflächen anliegt. Bei einer Belastung des Kugelgelenks in axialer Richtung, d.h. in Längsrichtung des Zapfens 1a ergibt sich zwischen dem jeweils belasteten stirnseitigen Ende der Kugelringschale 6 und der zugehörigen zylindrischen Mantelfläche 2a des Lagerringes 2 eine Keilwirkung auf die Zwischenlage 7. Diese führt zu einer hohen Steifigkeit des Kugelgelenks in Achsrichtung. Außerdem ergibt sich durch die erläuterte Formgebung von Kugelringschale 6 und Lagerring 2 eine kleine freie Oberfläche der elastischen Zwischenlage 7 in Form einer ringförmigen Stirnfläche, wodurch eine hohe dynamische Festigkeit der Zwischenlage 7, d.h. eine hohe Lebensdauer des Gelenkaufbaus bewirkt wird.

Während sich die beiden Ausführungsbeispiele des Kugelgelenks bezüglich der voranstehend beschriebenen Merkmale nicht unterscheiden, liegen hinsichtlich der Abdichtung und Festlegung der Lagerschale 5 im Gehäuse 4 Unterschiede vor.

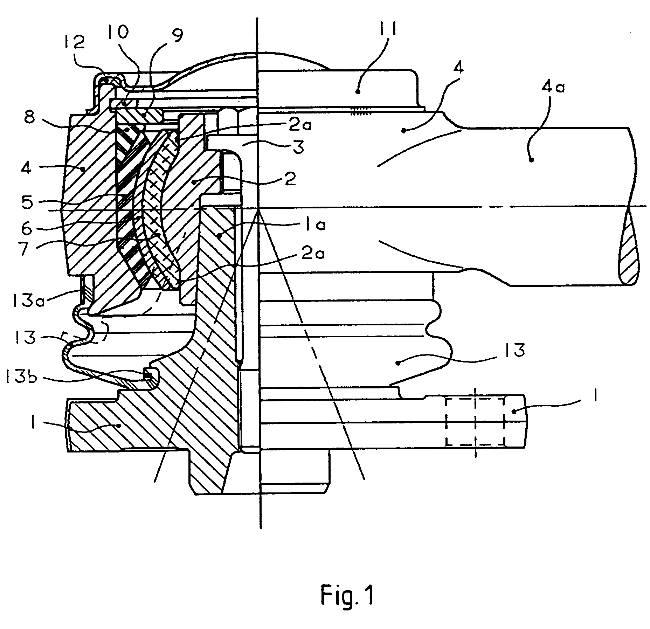

Beim Ausführungsbeispiel nach Fig. 1 wird die im unteren Teil geschlitzte Lagerschale 5 mittels eines ebenfalls aus Kunststoff bestehenden Keilringes 8 festgelegt, der über einen Zwischenring 9 durch einen Sprengring 10 im Gehäuse 4 festgelegt wird. Die kopfseitige Abdichtung des Kugelgelenks erfolgt durch eine Kappe 11, die mit einer Ringdichtung 12 versehen ist. Die der Flanschplatte 1 zugewandte Öffnung des Kugelgelenks wird durch einen Dichtungsbalg 13 verschlossen, der mit zwei Befestigungsringen 13a, 13b festgelegt ist.

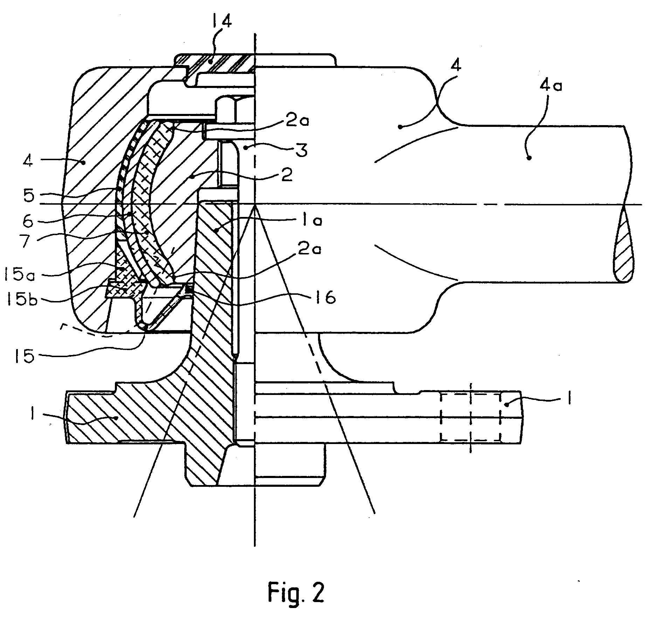

Beim Ausführungsbeispiel nach Fig. 2 erfolgt die kopfseitige Abdichtung des Gehäuses 4 durch eine Kunststoffkappe 14. Die im Gegensatz zur Ausführungsform nach Fig. 1 von der Unterseite her in das Gehäuse 4 eingesetzte Lagerschale 5 wird durch einen Keilring 15a festgelegt, der zusammen mit einem Haltering 15b einstückig an einem Dichtungsbalg 15 ausgebildet ist. Dieser Dichtungsbalg 15 ist mit seiner kleineren Öffnung auf dem Zapfen 1a dichtend angeordnet. Er liegt geschützt vollständig innerhalb des Gehäuses 4 und übernimmt gleichzeitig durch den in eine entsprechende Ringnut des Gehäuses 4 eingreifenden Haltering 15b die Festlegung der Lagerschale 5 im Gehäuse 4. In seiner kleineren Öffnung ist ein innenliegender Verstärkungsring 16 einstückig angeordnet, der für eine sichere Festlegung des Dichtungsbalges 15 auf dem Zapfen 1a sorgt.

### Bezugszeichenliste:

- 1: Flanschplatte
- 1a: Zapfen
- 2: Lagerring
- 2a: Mantelfläche
- 3: Dehnschraube
- 4: Gehäuse
- 4a: Achsstrebe
- 5: Lagerschale
- 6: Kugelringschale
- 7: Zwischenlage
- 8: Keilring
- 9: Zwischenring
- 10: Sprengring
- 11: Kappe
- 12: Ringdichtung
- 13: Dichtungsbalg
- 13a: Befestigungsring
- 13b: Befestigungsring
- 14: Kunststoffkappe
- 15: Dichtungsbalg
- 15a: Keilring
- 15b: Haltering
- 16: Verstärkungsring

## Patentansprüche

1. Kugelgelenk, insbesondere für Achsstreben von Kraftfahrzeugen, mit einem auf einem Zapfen einer Flanschplatte angeordneten Lagerring, auf dem mittels einer Lagerschale ein vorzugsweise mit einer Achsstrebe verbundenes Gehäuse begrenzt verdreh- und kippbar gelagert ist,
**dadurch gekennzeichnet,**
daß auf dem Lagerring (2) über eine elastische Zwischenlage (7) eine mit der Lagerschale (5) zusammenwirkende Kugelringschale (6) angeordnet ist.

2. Kugelgelenk nach Anspruch 1, dadurch gekennzeichnet, daß der Lagerring (2) mit einer kugelringförmigen Außenfläche und sich beidseitig in Achsrichtung des Zapfens (1a) anschließenden zylindrischen Mantelflächen (2a) versehen ist, an denen die elastische Zwischenlage (7) mit ringförmigen Endflächen anliegt.

3. Kugelgelenk nach Anspruch 2, dadurch gekennzeichnet, daß die Kugelringschale (6) mit ihren stirnseitigen Enden bis in den Bereich der zylindrischen Mantelflächen (2a) des Lagerringes (2) reicht.

4. Kugelgelenk nach mindestens einem der Ansprüche 1 bis 3, dadurch gekennzeichnet, daß die mit der Kugelringschale (6) zusammenwirkende Lagerschale (5) geschlitzt ist.

5. Kugelgelenk nach Anspruch 4, dadurch gekennzeichnet, daß die Lagerschale (5) mittels eines vorzugsweise elastischen Keilringes (8,15a) im Gehäuse (4) festgelegt ist.

6. Kugelgelenk nach Anspruch 5, dadurch gekennzeichnet, daß der Keilring (8) über einen Zwischenring (9) durch einen Sprengring (10) im Gehäuse (4) festgelegt ist.

7. Kugelgelenk nach Anspruch (5), dadurch gekennzeichnet, daß der Keilring (15a) im Gehäuse (4) durch einen Haltering (15b) festgelegt ist, der in eine Ringnut im Gehäuse (4) eingreift.

8. Kugelgelenk nach Anspruch 7, dadurch gekennzeichnet, daß der Haltering (15b) einstückig mit einem Dichtungsbalg (15) ausgebildet ist, dessen kleinere Öffnung abgedichtet auf dem Zapfen (1a) angeordnet ist.

9. Kugelgelenk nach Anspruch 8, dadurch gekennzeichnet, daß der Keilring (15a) einstückig mit dem Haltering (15b) und dem Dichtungsbalg (15) ausgebildet ist.

10. Kugelgelenk nach Anspruch 8 oder 9, dadurch gekennzeichnet, daß in der auf dem Zapfen (1a) angeordneten Öffnung des Dichtungsbalges (15) ein innenliegender Verstärkungsring (16) einstückig angeordnet ist.
